# EUROPEAN PATENT SPECIFICATION

(11) **EP 2 535 661 B1**
(45) Date of publication and mention of the grant of the patent: **24.04.2013**
(21) Application number: 11425260.4
(22) Date of filing: 24.10.2011
(51) Int. Cl.: F24J 2/52, H01L 31/042

(54) **Modular type assembly system for the installation of photovoltaic system**
Modularer Aufbau für ein photovoltaisches System
Ensemble modulaire pour l'installation d'un système photovoltaiqüe

(43) Date of publication of application: 19.12.2012
(73) Proprietor: Doors Sistem S.r.L., 35020 Brugine (PD) (IT)
(72) Inventor: Durello, Mariano, 35020 Sant'Angelo di Piove di Sacco (PD) (IT)
(74) Representative: Turini, Laura

(56) References cited:
- GB-A- 2 000 860
- JP-A- 9 250 219
- JP-A- 2001 107 518

## Description

### Technical field

The present invention concerns the technical field relative to photovoltaic modules in monocrystalline silicon.

In particular, the invention refers to an innovative modular structure pre-assembled in plant and that can be directly installed in situ.

### Background art

Document JP2001-107518 is considered the closest prior art. It discloses a mounting for a photovoltaic assembly including the features of the preamble of claim 1.

Photovoltaic modules have long been known, which are commonly installed in houses, industries, on the ground or on mechanical/electronic devices (e.g. solar trackers) that require electric feeding.

Photovoltaic technology, therefore, is well known and allows, through appropriate silicon cells, to exploit solar radiation for the production of electric current. It is frequent to see houses or industries furnished with said photovoltaic modules and also with, for example, advertising banners, lighting systems and other devices fed through said modules.

The whole allows to obtain various technical advantages. First of all, a lot of electric energy is saved. Further, the clean and natural "exploitation" of solar radiation is an unexhaustable and renewable energy source. Last, this technology contributes not in a small measure to a drastic decrease of atmospheric pollution and of the use of fossil fuels.

That being said, in the background art as it is, photovoltaic modules are assembled directly on houses and industries. In such sense, a support frame (or idoneous shear connections) is first arranged on which said modules are fixed.

Such a type of system renders the operation of assembly and installation long and complex.

It is therefore clear that, in accordance with the known technology, the greatest part of the elaboration is realized directly in the construction site, the whole implying not insignificant human efforts. It is in fact necessary to arrange the covering (if not present yet). Subsequently, all the structures and shear connections will have to be fixed for holding single photovoltaic modules in the covering. Moreover, each single photovoltaic module must be moved and positioned in a handy way for the operator.

This implies, in addition to a working risk in altitude, a not underestimable psycho-physical stress for the worker (each module weighs from 20 to 25 kg).

Moreover, it should be highlighted that such a system is not much appreciated by the Energy Services Manager (GSE for its acronym in Italian) due to a not always appreciated aesthetic factor (e.g.: stands in view, modules not in the same plane, etc.).

### Disclosure of invention

It is therefore the aim of the present invention to provide a photovoltaic modular structure that solves at least in part said technical inconveniences.

In particular, it is the aim of the present invention to provide a photovoltaic modular structure realizable in plant, easily transportable in situ and therefore already arranged for a quick and simple installation in the construction yard.

It is also the aim of the present invention to provide a photovoltaic modular structure that allows to make maintenance operations very easily, allowing the substitution also of just the photovoltaic laminates.

These and other aims are therefore obtained with the present modular structure with photovoltaic panels as per claim 1.

Said modular structure is formed by a support base that includes a first section (2) and a second section (3) arranged between them in a distanced and substantially parallel manner. The two sections are joined between them through two traverses (21) that connect transversally the first section to the second section. A photovoltaic laminate (110) is then arranged on the support base. Last, appropriate hooking profiles (25) are included to fix the laminate to the support base in an exchangeable manner and in such a way as to form a single modular element transportable in situ for the installation.

The modular structure, thus made, is easily realizable directly in plant based on the client's project and subsequently it can be easily transported to the yard for the installation. With the help of idoneous lifting means it is easily positioned directly on the covering, reducing significantly the risks for the operators that work in altitude. Such a constructive system results totally integrated in the covering, thus becoming an integral part of the covering itself and serving as building envelope.

Such a structure, moreover, is well seen and technically more appreciated from the aesthetic and constructive point of view by the GSE since it integrates better to the building structure from the architectonic point of view.

In particular, it should be highlighted that such a system does not involve any hard operation in yard since the whole is assembled in plant and not in altitude.

This reduces significantly the risk of eventual injuries or incidents that may happen in altitude (see I.N.A.I.L. charts) for works. Moreover, the installation times are reduced and the complexity of the installation is further reduced since it can be made also by operators qualified for the disposal and removal of exhausted coverings or for the installation of coverings in general, thus avoiding that the purchaser suffers the interference of other companies in the same yard.

Last, the difficulty of an eventual substitution of a damaged laminate is reduced since it can easily be unhooked from the base on which it is fixed and substituted with a new one.

Further advantages are deduced from the dependent claims.

### Brief description of drawings

Further characteristics and advantages of the present modular structure with photovoltaic panels, according to the invention, will result clearer with the description that follows of some embodiments made to illustrate but not to limit, with reference to the annexed drawings, wherein:
- Figure 1 describes the packet 1 composed of two sections (2, 3) which, together with the two traverses 21, form a base structure on which to couple a photovoltaic laminate;
- Figure 2 shows an example of modular structure with photovoltaic panels in accordance with a first possible embodiment of the invention;
- Eigure 3 shows the two sections (2, 3) coupled between them in such a way as to allow to draw near two adjacent modular structures;
- Eigure 4 shows in a top view and section A-A the fixing bracket kit;
- Figure 5 shows in section and in a top view a first embodiment of the invention in which the photovoltaic laminates are connected to support sections 21 that will form the traverses;
- Figure 6 shows a detail of connection of a traverse 21 to the sections (2, 3);

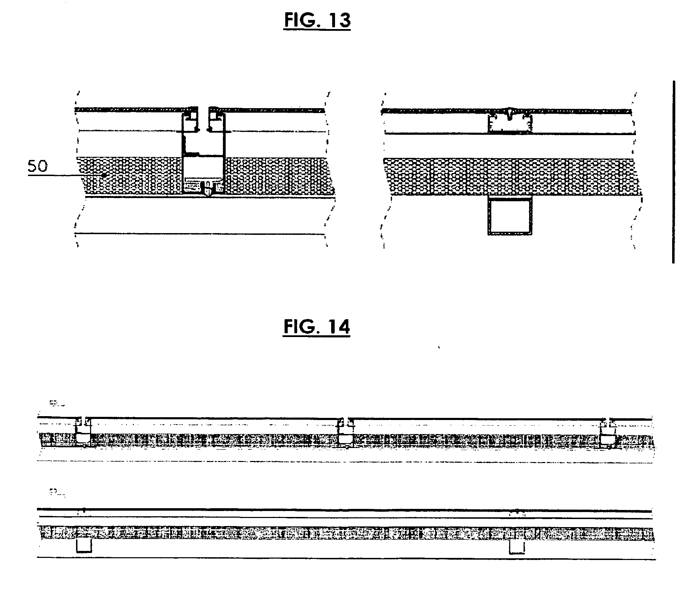

- Figures 7, 8, 13 and 14 present an embodiment of the invention in which the modular structure includes an insulation; for more clarity figure 7 is exploded with its components separated, while figure 8 shows a combination of them;
- Figures from 9 to 11 show a solution lacking insulation;

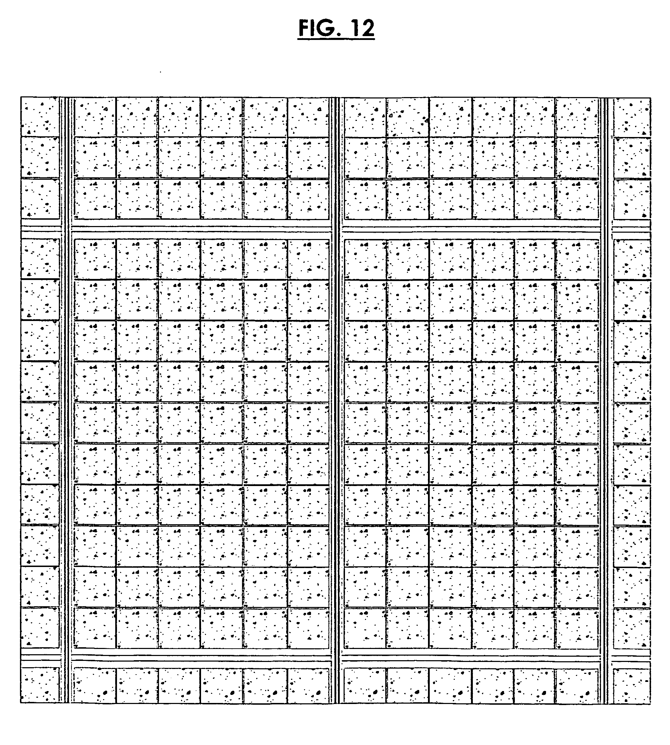

- Figure 12 shows a mounted assembly (plan view);
- Figure 15 shows a solution with cooling pipelines;
- Figures 16 and 17 show a second solution with the use of a camera glass 200 or polycarbonate;
- Figure 18 shows a frontal view of a modular structure composed of three modules (each module is, for example, as the one in figure 19, 19 bis or figure 2, according to the embodiment) about to be put side by side;
- Figure 19 shows a top view of a module in accordance with the second preferred embodiment of the invention;

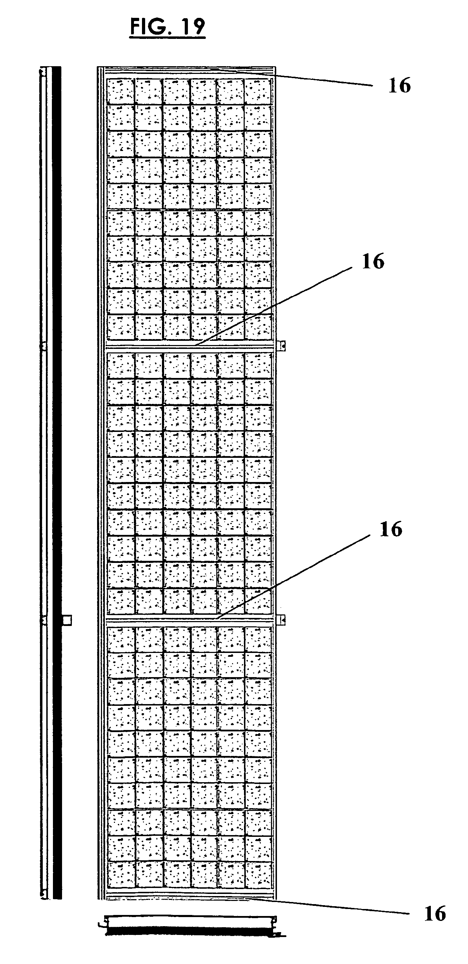

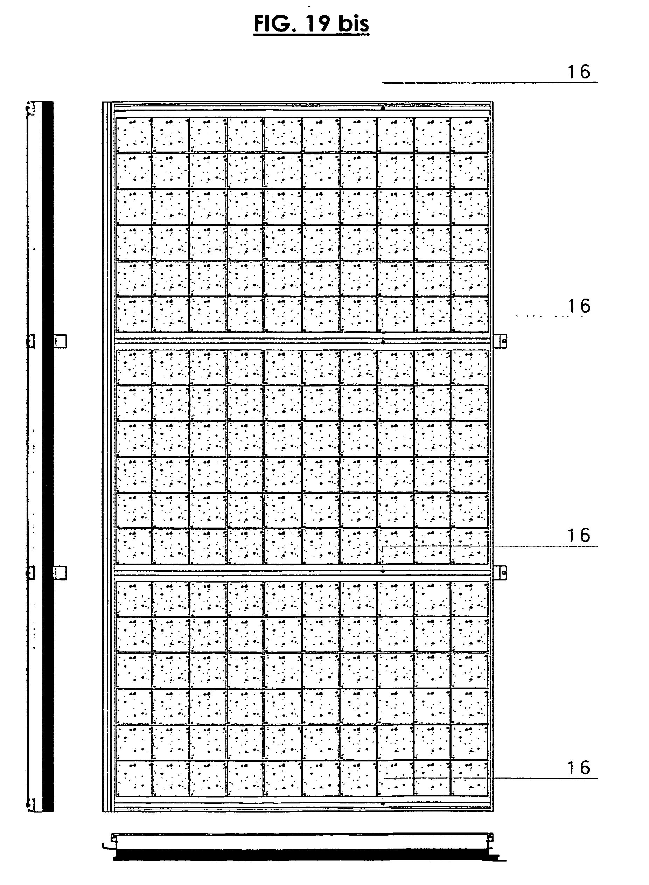

- Figure 19 bis shows, in a top view, a module in accordance with the second preferred embodiment of the invention in which, however, the photovoltaic laminate has been rotated, thus presenting ten columns of cells by six rows of cells;

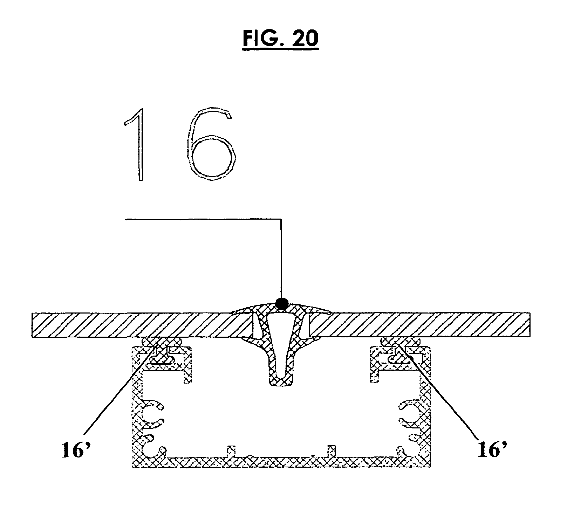

- Figure 20 shows a detail of junction between two laminates in between a traverse 21;

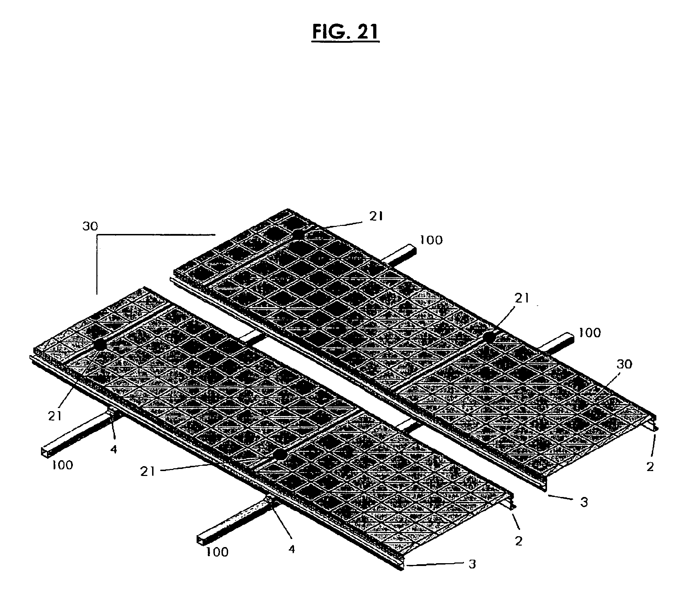

- Figure 21 shows an axonometric view of many modular structures assembled on a base 100.

### Description of some preferred embodiments

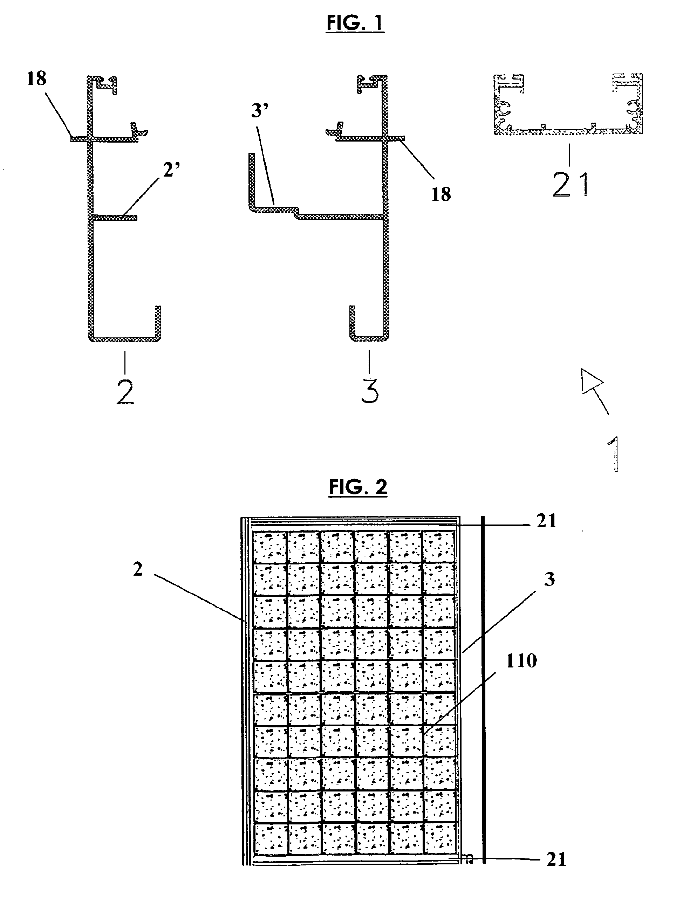

Figure 1 shows an assembly (or packet) of sections 1 which, as clarified right afterwards in the present description, are elements for the formation of the modular photovoltaic structure that is the object of the present invention.

In accordance with the invention, a first section 2 and a second section 3 are included, separated between them. The two sections, as per the background art, are therefore extruded beams of a predetermined length, for example in aluminium, in the form of a section as the one described in figure 1.

The measure of said sections (2, 3) can be any, according to the length of the modular structure that wants to be obtained and that will be described in detail afterwards.

A third element includes a traverse section 21 which serves to join the profile 3 to the profile 2. In particular, as shown in figure 2 two traverses 21 are included that are connected by the head to the first and to the second section (2, 3) in such a way as to form a base structure of the rectangular or quadrangular type (according to the selected lengths).

Said base structure is rigid and destined to support all the further elements that compose the modular structure.

In particular, figure 2 shows a photovoltaic laminate 110 which is arranged on top of said base structure.

The photovoltaic laminate is therefore comparable to a plate which is composed of photovoltaic cells and, more precisely, in the preferred embodiment of the invention is composed of six cells per column and ten cells per row.

It is anyway clear that laminates with a different number of cells can be used, for example 72 cells for a power of about 290 Watt, 60 cells for a power of about 235 Watt, 54 cells for a power of about 215 Watt or 48 cells for a power of about 190 Watt.

Laminates as described but rotated can also be used, in which the rows are exchanged with the columns.

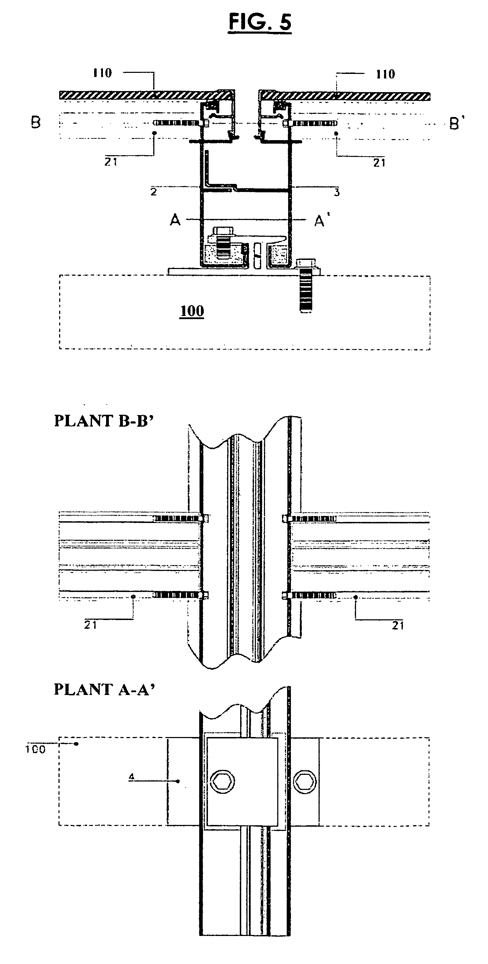

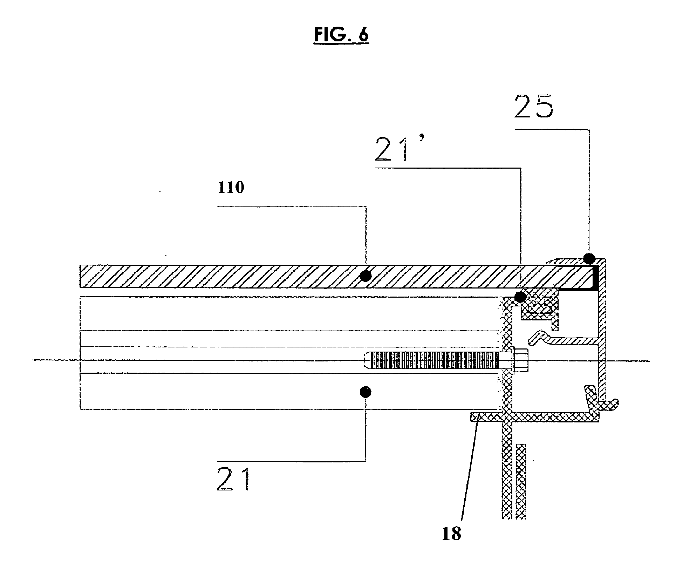

As shown in figure 6, for example, the two traverses 21 rest on brackets 18 formed by the sections 2 and 3 and visible in figure 1. As better clarified below, the support base must form a plane support surface on which the photovoltaic laminate 110 is made to lie and fixed. To this aim, therefore, the height of the traverse 21 is such as to result substantially at the same level as the end of the sections 2 and 3 when the traverse lies on the brackets 18 (see figure 5 or figure 6, for example).

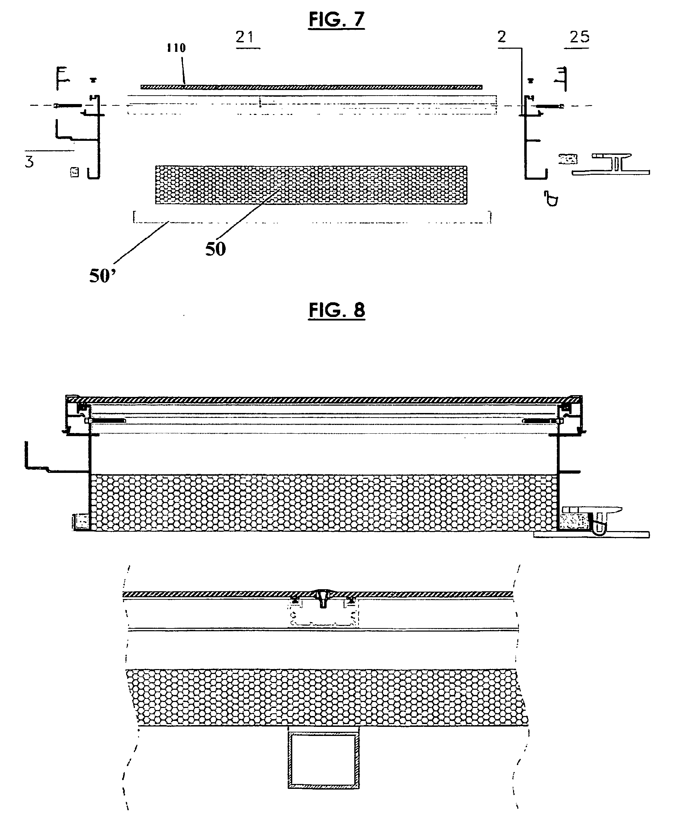

Going on with the structural description of the invention, figure 6 and figure 7 show in detail the connection between the traverse 21 and the sections (2, 3) on both sides. Figure 6, just for simplicity purposes, extrapolates a connection to just one section (2, 3), while figure 7 shows in an exploded view such a connection also to the other section.

The section (2, 3) is therefore holed in such a way as to be able to apply a screw or a bolt to it that is inserted longitudinally in the traverse 21, realizing the connection.

Always figure 6 and figure 7 show a glazing bead 25 that is applied in order to grasp the photovoltaic laminate and thus fix it integrally to the sections 2 and 3. The glazing bead is made to lie on an appendix formed by the sections 2 and 3 and, through an appropriate quick hooking system (a joint system), blocks the laminate to the section.

This solution has the technical advantage of permitting a quick removal in case of an eventual substitution of the photovoltaic laminate.

The quick hooking system of the glazing bead is clearly shown in the section of detail of figure 6, from which it can be deduced that the glazing bead has an open P section in such a way as to form an elastic vice between which the laminate and an appendix 21' of the section 2 and 3 is grasped elastically.

Section 3, as per figure 1, presents an L-shaped appendix 3' whose function is that of lying on the bracket 2' of the section 2 in such a way as to create a reference that assures the correct coplanarity between the parts in assembly phase (in particular during the drawing near of many modular structures, as explained better below).

The assembly phases of said base structure are described below. In plant, the following operations are carried out:

A photovoltaic laminate 110 is arranged, which has been previously realized.

The custom-made cut of the sections 2, 3 and 21 is carried out with the idoneous numerical control machines.

The profiles 2 and 3 are holed where indicated, for fixing the two traverses 21 in such a way as to realize a substantially rectangular base structure. At this point, as better described in detail below, the eventual seal and compensation gaskets are inserted in the profiles 2, 3 and 21. Subsequently, the photovoltaic laminate is positioned and fixed to the base structure obtained. To that aim, the glazing bead profiles 25 are positioned in a joint manner to close the packet.

The base structure thus obtained is therefore ready for being placed in situ and, according to the area in metres to cover, is drawn near to other identical twin structures.

Figure 21, for example, renders well the idea of the modularity by showing in axonometry a bearing structure 100 (for example the roof of a building) on which to apply the modular structure that is the object of the invention.

In a first embodiment of the invention, therefore, a modular structure has been defined in the present description as the assembly of the two profiles with the two traverses 21 on which a single laminate rests, for example ten by six (number of cells).

In that case, a length of the two sections (2, 3) is preferably selected comprised within a range from 1,5 m to 1,7 m and, more preferably, of about 1,60 m. The advantage of said measures, in particular of the measure of 1,60 m, is that of allowing to obtain modules of a contained area so that they are easily transportable and assemblable in situ.

Section 21 can have lengths comprised within a range from 0,9 m to 2 m.

In particular, the combination of traverses 1 m long with the section (2, 3) 1,6 m long renders the module compact and easily transportable.

In a preferred variant of the invention, as shown in figure 19, the modular structure can include a support base such as to allow the application of two or more photovoltaic laminates. For example, figure 19 shows a module on which three photovoltaic laminates rest for an overall number of 30 by six cells. In that case, there will be four traverses 21 that join among them the two sections (2, 3) of appropriate length.

In this case, the two sections will be selected of lengths comprised within a range from 1,0 m to 7 m. This measure has the advantage of covering the covering areas of different measures.

The dimensions of such module are therefore such as to cover a wider area, though maintaining contained weighs and an optimal structural solidity.

Figure 19 bis shows the same solution of figure 19 with the photovoltaic laminates rotated of 90°.

In the longitudinal sense, as shown in figure 19, 19 bis and in the detail of figure 20, two photovoltaic panels rest in between the traverse 21 and are connected between them through a seal and compensation gasket 16.

This gasket has the task of compensating the dilations/contractions of the photovoltaic panel.

Structurally, it looks as a double elastic vice through which to trap the two longitudinal edges of the two photovoltaic panels.

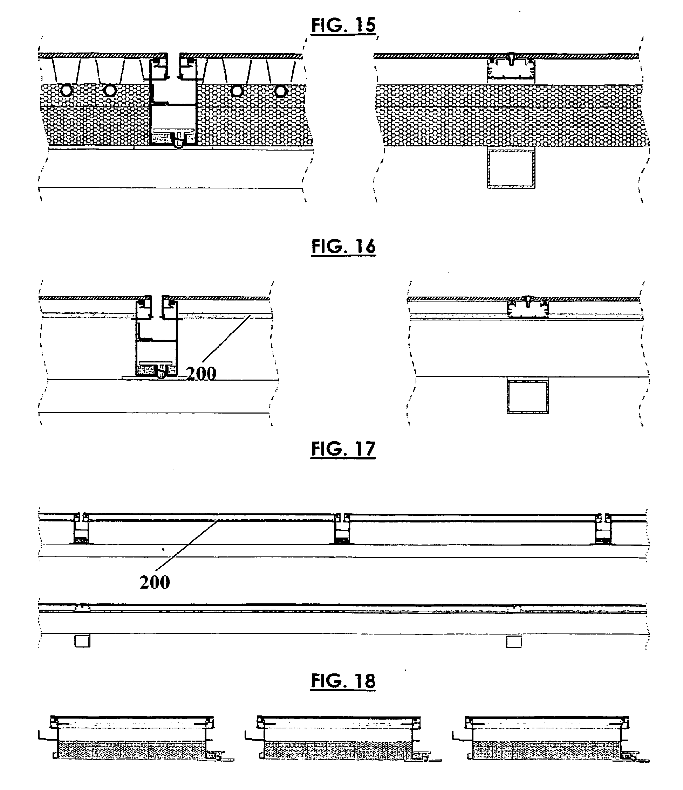

Figure 18 shows three modular structures ready for being drawn near one to the other and fixed in situ to obtain a photovoltaic covering.

The fixing and the drawing near, as clarified below, is obtained through the use of a fixing bracket kit.

Figure 21 extrapolates in an axonometric view the two sections 2 and 3 and the traverses 21 on which the three photovoltaic laminates of each modular structure (2 drawn near in this case) rest. The modular structure of figure 21 is therefore identical to that of figure 19 except for the fact that the module has been designed cut out just for reasons of space. The modular structure, as shown in figure 21, has been designed for clarity purposes separated from another modular structure to which it is drawn near and put at its side, as shown precisely in figure 18 as well.

In that case, therefore, in phase of arrangement of the modular structure of figure 19 in plant, the three photovoltaic laminates are arranged in sequence on the base structure fixing, at the same time, the seal and compensation gaskets 16 between a laminate and the subsequent one placed in between the traverse 21.

With reference to figure 21 and figure 18, the coupling in the transversal sense (along the length of the beams 100) is consolidated through the application of the joint bracket kit.

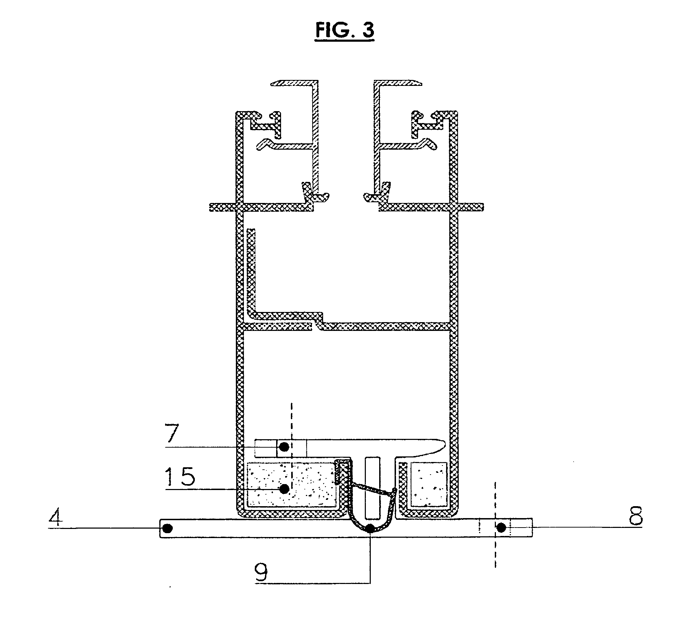

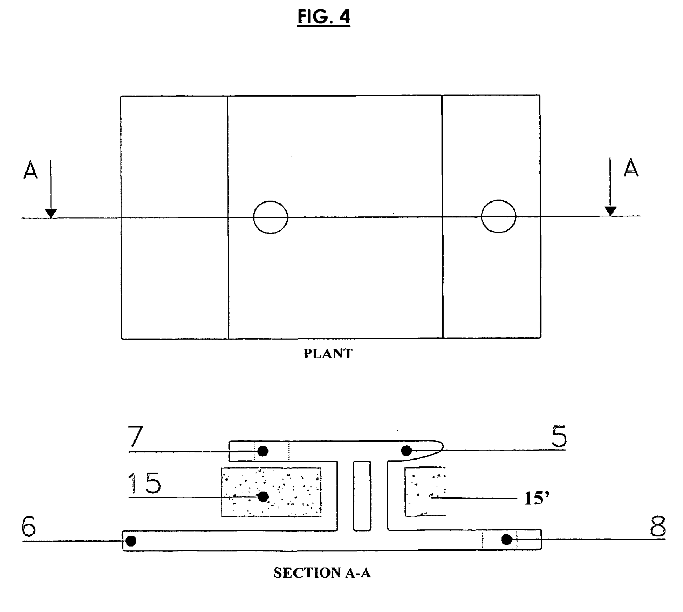

The joint bracket kit is visible in figure 3, in figure 18 and, for more descriptive clarity, is extrapolated from the assembly in the subsequent view from top and section of figure 4.

The joint bracket kit includes a bracket 4 having a superior base 5 and an inferior base 6. The superior base presents a first passing hole 7 and the inferior base a second passing hole 8. The hole 8 is used for the application of connection means, for example screws, nails or bolts, to connect the bracket 4 to the structure 100 to which to apply the assembly (for example the roof of a house or bearing structure of an industrial building). The hole 7 serves to connect the bracket to a profile 15 in steel or aluminium of the same width of the bracket 4.

As rendered clear by figure 18, each modular structure, or module, includes its own bracket 4 connected to it through the profile 5 screwed to the bracket.

Once the module is fixed to the structure 100 through the bracket, an adjacent module is put at its side in such a way that the appendix 3' rests on the bracket 2' until it reaches the correct position. In this embodiment, the inferior part of the section 3, forming a seat into which a further stiffening block 15' is arranged, is inserted to a stop against the central shank of the bracket, resulting interposed between the superior base 5 and the inferior base 6 of the bracket 4 itself from the opposed part to that of connection of the section 2.

This second module drawn near will have, as shown in figure 18, its further bracket kit through which it is fixed to the structure 100. At this point, it can be continued in sequence for the number of modules that wants to be arranged.

Going on in the structural description of the invention, figure 5 shows a generic structure 100 on which to apply the photovoltaic laminates 20 (shown also in the cited figure 21).

Section A-A' shows the bracket kit in a top view and the underlying structure 100 to which the modular assembly is applied.

Figure 5 shows the two photovoltaic laminates (20, 30) which are fixed each one to the relative profile (2, 3) .

Section B-B' of figure 5 shows the two traverses 21 in section fixed to the profiles 2 and 3.

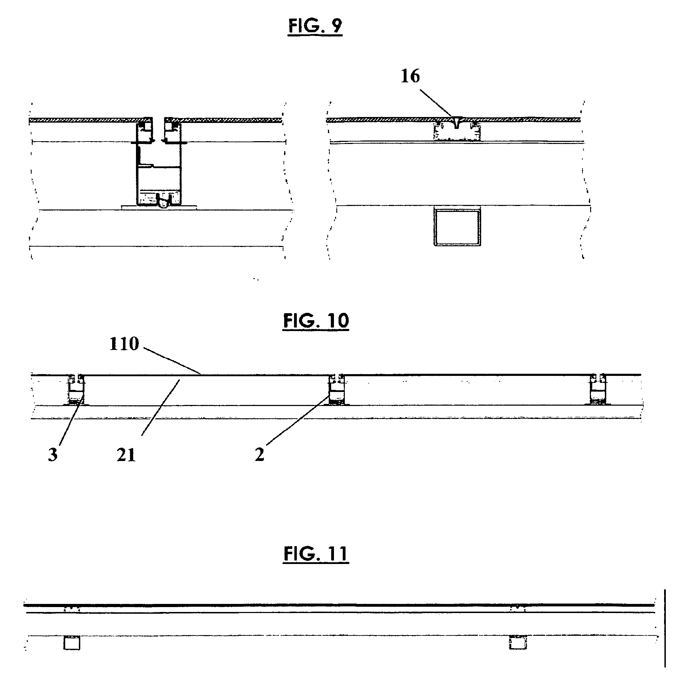

Going on in the structural description of the invention, figures 9, 10 and 11 show a first variant of modular structure formed by the photovoltaic laminate connected to the base structure as described. In this case, on the structure 100, the modular elements obtained, which are formed just by the photovoltaic laminates and directly rest on the sections 2, 3 and 21 that form the support base, are arranged in sequence.

In this embodiment, particularly simple from the structural point of view, no insulation and/or cooling system is foreseen and is useful for applications of greenhouses or agricultural applications.

Figure 10 shows a part of the integrated packet seen from top.

A second solution is totally equivalent to the first one, except for the additional presence of a camera glass or polycarbonate 200 (figure 16 and 17).

This application serves to insulate the surface, letting the light pass; it is idoneous for attics or façades.

A third solution is totally equivalent to the first one, except for the additional presence of an insulated panel 50 composed by the insulation itself and by an external metallic covering (see figures 7 and 8). The insulated panel is rendered integral through fixing systems with screws and fixed to the sections 2 and 3 in such a way as to have a thermal cut 50' (see figure 7).

This solution has the technical advantage of reducing costs in the case of a new house or industry. In fact, in a new house it is always necessary to foresee the realization of an impermeable covering (for example with sandwich panels fretted and insulated or with upperworks in fiber cement) and the realization of the necessary structures for the fixing of the photovoltaic modules.

In this case, such a solution includes integrated to it the insulation.

A fourth solution is shown in figure 15 which is identical to the third solution but, in addition, presents channels in the insulation layer inside which a cooling fluid circulates. Inside the space interposed between the photovoltaic laminate and the insulation layer a series of sinusoidal-shaped profiles and channels of cooling liquid circulation is included. In this manner, through said profiles, the heat of the photovoltaic laminates can be disposed of; said profiles heat by conduction, disposing of the heat through the fluid circulating in the pipelines.

In this manner, the performance of the photovoltaic modules is kept high and it is possible to eventually take advantage of the same heat obtained with the heating of the liquid.

In the case of the solution by means of insulation or cooling, before the positioning of the laminate, the insulation to the profiles 2 and 3 is fixed and, eventually, the cooling system.

Now the assembly in yard can be carried out since the modules arrive pre-assembled.

In accordance with the invention, therefore, such modular structures, once combined, are lifted with idoneous lifting means arranged in yard and are positioned directly on the covering. The operator proceeds directly with the fixing of the module to the bearing structure of the covering.

## Claims

1. A photovoltaic covering comprising one or more modular structures with photovoltaic panels that can be drawn near one to the other, each modular structure comprising:
- A photovoltaic laminate (110);
- A support base comprising a first section (2), a second section (3) and two traverses (21) that join transversally the first section and the second section in such a way as to form a support plan on which the photovoltaic laminate results arranged (110);
and **characterized by** the fact that the first section (2) has a bracket (2') and the second section (3) has an L-shaped appendix (3') whose function is that of lying on the bracket (2') of the section (2) of an adjacent modular structure for creating a reference that assures the correct complanarity between the parts in assembly phase when a modular structure is put at the side of the adjacent module;
- First section (2) and the second section (3) comprising further an appendix for supporting a glazing bead (25);
- Connection means to fix in a removable manner the photovoltaic laminate (110) to the support base in such a way as to form a single modular element transportable in situ for the installation, said connection means (25) comprising the glazing bead (25) having an open P-section that form an elastic vice between which the photovoltaic laminate (110) and an end (21') of the section (2, 3) result grasped elastically;
- wherein a quick hooking kit is further included through which to connect the modular structure to an underlying structure (100) and draw near a modular structure to a subsequent adjacent modular structure, said hooking kit comprising a bracket (4) having an inferior base (6) of connection to the underlying structure (100), said bracket connecting on one part to the section (2) of the modular structure and being configured to hold on the opposite part the section (3) of an adjacent modular structure, wherein the bracket (4) comprises a superior base (5) provided with a hole (7) for the passage of connection means, the connection to the section (2) taking place through an element (15) interposed between the superior base (5) of the bracket (4) and the section (2) located on the inferior base (6) of the bracket and inserting connection means in the interposed element (5) through the hole (7).

2. A photovoltaic covering, according to claim 1, wherein the two traverses (21) connect to the first (2) and to the second section (3) in such a way as to form a support plan that is substantially rectangular or quadrangular of a predetermined area.

3. A photovoltaic covering, according to claim 2, wherein said two traverses (21) connect to the first (2) and to the second head section (3) through connection means.

4. A photovoltaic covering, according to one or more of the preceding claims, wherein a caulking (50) is further included interposed between the two sections (2, 3) and arranged below the traverses (21).

5. A photovoltaic covering, according to one or more of the preceding claims, wherein a polycarbonate glass (200) is further included placed under the traverse (21).

6. A photovoltaic covering, according to claim 4 or 5, wherein, interposed between the caulking (50) and the photovoltaic laminate (110), a heat dissipation element is further included.

7. A photovoltaic covering, according to claim 6, where said heat dissipation element is in the shape of a sinusoidal laminate and of a circulation pipeline for a fluid, said laminate having the apexes of the sinusoidals in contact with the photovoltaic laminate from one part and the opposed apexes opposed in contact with the pipelines.

8. A photovoltaic covering, according to claim 7, wherein the pipelines are arranged in the insulation layer.

9. A photovoltaic covering, according to one or more of the preceding claims, wherein two support bases having a traverse (21) in common are included and two photovoltaic laminates placed on said two support bases and connected between them in between the traverse (21) in common through a gasket (16) configured to hook said two laminates.

10. A photovoltaic covering, according to claim 9, wherein three support bases having two traverses (21) in common are included and three photovoltaic laminates placed on said three support bases and connected among them in between the two traverses (21) in common through a gasket (16) configured to hook said two laminates.

11. A photovoltaic covering, according to claim 1, wherein a seal is inserted in a site obtained into the end (21').

12. A method for assembling a photovoltaic covering comprising one or more modular photovoltaic structure that can be drawn near one to the other, the method comprising the operations of:
- Arrangement of a photovoltaic laminate (110);
- Realization of a support base on which to fix the photovoltaic laminate through the connection of two sections (2, 3) and two traverses (21);
- Wherein the first section (2) has a bracket (2') and the second section (3) has an L-shaped appendix (3') whose function is that of lying on the bracket (2') of the section (2) of an adjacent modular structure for creating a reference that assures the correct complanarity between the parts in assembly phase when a modular structure is put at the side of the adjacent module;
- First section (2) and the second section (3) comprising further an appendix for supporting a glazing bead (25);
- Connection of the laminate to the support base through the removable application of connection means in such a way as to form a single modular element transportable in situ for the installation, said operation comprising the application of a glazing bead (25) having an open P-section that form an elastic vice between which the photovoltaic laminate (110) and an end (21') of the section (2, 3) result grasped elastically;
- Connection of the modular structure to an underlying structure (100) and draw near a modular structure to a subsequent adjacent modular structure, said hooking kit comprising a bracket (4) having an inferior base (6) of connection to the underlying structure (100), said bracket connecting on one part to the section (2) of the modular structure and being configured to hold on the opposite part the section (3) of an adjacent modular structure, wherein the bracket (4) comprises a superior base (5) provided with a hole (7) for the passage of connection means, the connection to the section (2) taking place through an element (15) interposed between the superior base (5) of the bracket (4) and the section (2) located on the inferior base (6) of the bracket and inserting connection means in the interposed element (5) through the hole (7).

## Patentansprüche

1. Photovoltaik-Abdeckung, die eine oder mehrere Modularstrukturen mit Solarpaneelen, die nahe zu einander gezogen werden können, umfasst, wobei jede Modularstruktur Folgendes umfasst:
- Ein Photovoltaik-Laminat (110);
- Einen Stützsockel, der einen ersten Abschnitt (2), einen zweiten Abschnitt (3) und zwei Traversen (21) umfasst, die den ersten Abschnitt und den zweiten Abschnitt quer derart verbinden, dass eine Stützfläche gebildet wird, auf der die Photovoltaik-Laminate angeordnet werden (110);
und **dadurch gekennzeichnet, dass** der erste Abschnitt (2) eine Winkelstütze (2') hat und der zweite Abschnitt (3) einen L-förmigen Ansatz (3') hat, dessen Funktion es ist, auf der Winkelstütze (2') des Abschnitts (2) einer angrenzenden Modularstruktur aufzuliegen, um einen Bezug herzustellen, der die korrekte Koplanarität zwischen den Teilen während der Montagephase sichert, wenn eine Modularstruktur neben ein angrenzendes Modul platziert wird;
- Erster Abschnitt (2) und der zweite Abschnitt (3) umfassen weiterhin einen Ansatz zum Tragen einer Glashalteleiste (25);
- Verbindungsmittel, um das Photovoltaik-Laminat (110) demontierbar am Stützsockel derart zu befestigen, dass ein einzelnes Modulelement gebildet wird, das zur Installation in situ transportiert werden kann, wobei das Verbindungsmittel (25), das die Glashalteleiste (25) umfasst, einen offenen P-Abschnitt hat, der eine elastische Klemme bildet, zwischen der das Photovoltaik-Laminat (110) und ein Ende (21') des Abschnitts (2, 3) elastisch festgehalten werden;
- **dadurch gekennzeichnet, dass** weiterhin ein Schnelleinhak-Satz inbegriffen ist, mittels dessen die Modularstruktur mit einer darunter liegenden Struktur (100) verbunden werden kann und eine Modularstruktur in die Nähe einer angrenzenden Modularstruktur gezogen werden kann, wobei der Schnelleinhak-Satz eine Winkelstütze (4) umfasst, die einen unteren Sockel (6) zur Verbindung mit der darunterliegenden Struktur (100) hat, wobei die Winkelstütze mit einem Teil mit dem Abschnitt (2) der Modularstruktur verbunden ist und ausgebildet ist, um mit dem gegenüberliegenden Teil den Abschnitt (3) einer angrenzenden Modularstruktur zu halten, **dadurch gekennzeichnet, dass** die Winkelstütze (4) einen oberen Sockel (5) umfasst, der mit einem Loch (7) zum Durchlass des Verbindungsmittels ausgestattet ist, wobei die Verbindung mit dem Abschnitt (2) mittels eines Elements (15) vorgenommen wird, das zwischen dem oberen Sockel (5) der Winkelstütze (4) und dem auf dem unteren Sockel (6) der Winkelstütze platzierten Abschnitt (2) eingeschoben ist und das Verbindungsmittel in das eingeschobene Element (5) durch das Loch (7) eingeführt wird.

2. Photovoltaik-Abdeckung nach Anspruch 1, **dadurch gekennzeichnet, dass** die zwei Traversen (21) derart mit dem ersten (2) und dem zweiten Abschnitt (3) verbunden sind, dass eine Stützfläche gebildet wird, die im Wesentlichen ein Rechteck oder Viereck eines vorgegebenen Bereichs ist.

3. Photovoltaik-Abdeckung nach Anspruch 2, **dadurch gekennzeichnet, dass** die zwei Traversen (21) mit dem ersten (2) und dem zweiten Kopfstück (3) über Verbindungsmittel verbunden sind.

4. Photovoltaik-Abdeckung nach einem oder mehreren der vorstehenden Ansprüche, **dadurch gekennzeichnet, dass** weiterhin eine Versiegelung (50) zwischen den zwei Abschnitten (2, 3) eingeschoben ist und unter den Traversen (21) angeordnet ist.

5. Photovoltaik-Abdeckung nach einem oder mehreren der vorstehenden Ansprüche, **dadurch gekennzeichnet, dass** weiterhin ein unter der Traverse (21) platziertes Polycarbonatglas (200) inbegriffen ist.

6. Photovoltaik-Abdeckung nach Anspruch 4 oder 5, **dadurch gekennzeichnet, dass** weiterhin ein zwischen der Versiegelung (50) und dem Photovoltaik-Laminat (110) eingeschobenes Element zur Wärmeableitung inbegriffen ist.

7. Photovoltaik-Abdeckung nach Anspruch 6, wobei das Element zur Wärmeableitung die Form eines sinusförmigen Laminats und einer Zirkulations-Rohrleitung für ein Medium hat, wobei die Scheitelpunkte der Sinuskurven des Laminats einerseits in Kontakt mit dem Photovoltaik-Laminat und die gegenüberliegenden Scheitelpunkte andererseits in Kontakt mit den Rohrleitungen stehen.

8. Photovoltaik-Abdeckung nach Anspruch 7, **dadurch gekennzeichnet, dass** die Rohrleitungen in der Isolationsschicht angeordnet sind.

9. Photovoltaik-Abdeckung nach einem oder mehreren der vorstehenden Ansprüche, **dadurch gekennzeichnet, dass** zwei Stützsockel mit gemeinsamer Traverse (21) inbegriffen sind und zwei Photovoltaik-Laminate auf den zwei Stützsockeln platziert sind und zwischen der gemeinsamen Traverse (21) miteinander mittels einer Dichtung (16) verbunden sind, die ausgebildet ist, um die zwei Laminate einzuhängen.

10. Photovoltaik-Abdeckung nach Anspruch 9, **dadurch gekennzeichnet, dass** drei Stützsockel mit zwei gemeinsamen Traversen (21) inbegriffen sind und drei Photovoltaik-Laminate auf den drei Stützsockeln platziert sind und miteinander mittels einer Dichtung (16) verbunden sind, die ausgebildet ist, um die zwei Laminate einzuhängen.

11. Photovoltaik-Abdeckung nach Anspruch 1, **dadurch gekennzeichnet, dass** eine Abdichtung an einer am Ende (21') erhaltenen Stelle eingefügt wird.

12. Verfahren zur Montage einer Photovoltaik-Abdeckung, die eine oder mehrere modulare Photovoltaik-Strukturen umfasst, die nahe zu einander gezogen werden können, wobei das Verfahren die folgenden Arbeitsabläufe umfasst:
- Anordnung eines Photovoltaik-Laminats (110);
- Umsetzung eines Stützsockels, auf dem das Photovoltaik-Laminat mittels Verbindung zweier Abschnitte (2, 3) und zweier Traversen (21) befestigt wird;
- **Dadurch gekennzeichnet, dass** der erste Abschnitt (2) eine Winkelstütze (2') hat und der zweite Abschnitt (3) einen L-förmigen Ansatz (3') hat, dessen Funktion es ist, auf der Winkelstütze (2') des Abschnitts (2) einer angrenzenden Modularstruktur aufzuliegen, um einen Bezug herzustellen, der die korrekte Koplanarität zwischen den Teilen während der Montagephase sichert, wenn eine Modularstruktur neben ein angrenzendes Modul platziert wird;
- Erster Abschnitt (2) und der zweite Abschnitt (3) umfassen weiterhin einen Ansatz zum Tragen einer Glashalteleiste (25);
- Verbindung des Laminats mit dem Stützsockel derart mittels der demontierbaren Anwendung von Verbindungsmitteln, dass ein einzelnes Modulelement gebildet wird, das zur Installation in situ transportiert werden kann, wobei der Arbeitsablauf das Einsetzen einer Glashalteleiste (25) umfasst, die einen offenen P-Abschnitt hat, der eine elastische Klemme bildet, zwischen der das Photovoltaik-Laminat (110) und ein Ende (21') des Abschnitts (2, 3) elastisch festgehalten werden;
- Verbindung der Modularstruktur mit einer darunter liegenden Struktur (100) und Ziehen einer Modularstruktur in die Nähe einer angrenzenden Modularstruktur, wobei der Schnelleinhak-Satz eine Winkelstütze (4) umfasst, die einen unteren Sockel (6) zur Verbindung mit der darunterliegenden Struktur (100) hat, wobei die Winkelstütze mit einem Teil mit dem Abschnitt (2) der Modularstruktur verbunden ist und ausgebildet ist, um mit dem gegenüberliegenden Teil den Abschnitt (3) einer angrenzenden Modularstruktur zu halten, **dadurch gekennzeichnet, dass** die Winkelstütze (4) einen oberen Sockel (5) umfasst, der mit einem Loch (7) zum Durchlass des Verbindungsmittels ausgestattet ist, wobei die Verbindung mit dem Abschnitt (2) mittels eines Elements (15) vorgenommen wird, das zwischen dem oberen Sockel (5) der Winkelstütze (4) und dem auf dem unteren Sockel (6) der Winkelstütze platzierten Abschnitt (2) eingeschoben ist und das Verbindungsmittel in das eingeschobene Element (5) durch das Loch (7) eingeführt wird.

## Revendications

1. Une couverture photovoltaïque comprenant une ou plusieurs structures modulaires, avec des panneaux photovoltaïques, pouvant être disposés les uns à côté des autres ; chaque structure modulaire comprend :
- Une feuille photovoltaïque (110) ;
- Une base de support comprenant une première section (2), une seconde section (3) et deux traverses (21) qui unissent, transversalement, la première section et la seconde section de sorte à former un plan d'appui sur lequel la feuille photovoltaïque est placée (110) ;
et **caractérisée par le fait que** la première section (2) est munie d'une bride (2') et la seconde section (3) d'un appendice en forme de L (3') dont la fonction est celle de se coucher sur la bride (2') de la section (2) de la structure modulaire contiguë, le but étant de créer une référence assurant la coplanarité appropriée entre les pièces durant la phase d'assemblage, au moment de placer une structure modulaire à côté du module contigu ;
- La première section (2) et la seconde section (3) comprenant également un appendice servant à soutenir un encadrement (25) ;
- Des moyens de raccordement servant à attacher, de façon amovible, la feuille photovoltaïque (110) à la base de support de sorte à former un élément modulaire simple, transportable sur le lieu d'installation. Lesdits moyens de raccordement (25) comprennent un encadrement (25) qui dispose d'une section ouverte en forme de P, formant un étau flexible entre lequel la feuille photovoltaïque (110) et une extrémité (21') de la section (2, 3) apparaissent serrée, de façon flexible ;
- Où un kit d'accrochage rapide est également compris. Celui-ci permet de raccorder la structure modulaire à une structure sous-jacente (100) et de disposer une structure modulaire près d'une autre structure modulaire contiguë. Ledit kit comprend une bride (4) munie d'une base inférieure (6) de raccordement à la structure sous-jacente (100), ladite bride raccordant sur un côté de la section (2) de la structure modulaire et étant configurée de sorte à tenir, sur l'autre côté, la section (3) d'une structure modulaire contiguë, où ladite bride 4) comprend une base supérieure (5) pourvue d'un orifice (7) pour le passage des moyens de raccordement, le raccordement à la section (2) se faisant à travers un élément (15) intercalé entre la base supérieure (5) de la bride (4) et la section (2) située sur la base inférieure (6) de la bride et introduisant les moyens de raccordement dans l'élément intercalé (5) à travers l'orifice (7).

2. Une couverture photovoltaïque, conformément à la revendication 1, où les deux traverses (21) raccordent la première (2) et la seconde (3) section de sorte à former un plan d'appui qui est substantiellement rectangulaire ou carré suivant une zone prédéterminée.

3. Une couverture photovoltaïque, conformément à la revendication 2, où lesdites deux traverses (21) raccordent la première (2) et la seconde section de tête (3) à travers ces moyens de raccordement.

4. Une couverture photovoltaïque, conformément à l'une ou plusieurs des revendications précédentes, où un calfeutrage (50) est également inclus et intercalé entre les deux sections (2, 3) et disposé sous les traverses (21).

5. Une couverture photovoltaïque, conformément à l'une ou plusieurs des revendications précédentes, où un verre en polycarbonate (200) est également inclus et placé sous la traverse (21).

6. Une couverture photovoltaïque, conformément à la revendication 4 ou 5, où un élément de dissipation de chaleur est également inclus, intercalé entre le calfeutrage (50) et la feuille photovoltaïque (110).

7. Une couverture photovoltaïque, conformément à la revendication 6, où ledit élément de dissipation de chaleur est dans la forme d'une feuille sinusoïdale et d'un pipeline de circulation de fluide, où les sommets de ladite feuille sinusoïdale sont en contact, d'un côté, avec la feuille photovoltaïque et les sommets opposés au contact des pipelines.

8. Une couverture photovoltaïque, conformément à la revendication 7, où les pipelines sont disposés à l'intérieur d'une couche isolante.

9. Une couverture photovoltaïque, conformément l'une ou plusieurs des revendications précédentes, où les deux bases de support, ayant une traverse (21) commune, sont incluses et deux feuilles photovoltaïques sont placées sur ces deux bases de support et raccordées entre elles, entre la traverse (21) commune, par le biais d'un joint (16) configuré pour accrocher ces deux feuilles.

10. Une couverture photovoltaïque, conformément à la revendication 9, où lesdites trois bases de support, ayant deux traverses (21) communes, sont incluses et trois feuilles photovoltaïques sont placées sur ces trois bases de support et raccordées entre elles, entre les deux traverses (21) communes, par le biais d'un joint (16) configuré pour accrocher lesdites deux feuilles.

11. Une couverture photovoltaïque, conformément à la revendication 1, où un joint d'étanchéité est inséré dans un emplacement obtenu à l'intérieur de l'extrémité (21').

12. Une méthode pour assembler une couverture photovoltaïque, comprenant une ou plusieurs structures photovoltaïques modulaires qui peuvent être disposées les unes à côté des autres ; cette méthode comprend les opérations suivantes :
- Disposition d'une feuille photovoltaïque (110) ;
- Réalisation d'une base de support sur laquelle fixer la feuille photovoltaïque par le biais du raccordement de deux sections (2, 3) et de deux traverses (21) ;
- Où la première section (2) est munie d'une bride (2') et la seconde section (3) d'un appendice en forme de L (3') dont la fonction est celle de se coucher sur la bride (2') de la section (2) d'une structure modulaire contiguë, dans le but de créer une référence qui assure la coplanarité appropriée entre les pièces lors de la phase d'assemblage, au moment de placer une structure modulaire à côté du module contigu ;
- La première section (2) et la seconde section (3) comprennent également un appendice pour soutenir un encadrement (25) ;
- Le raccordement de la feuille sur la base de support à travers l'application amovible des moyens de raccordement de sorte à créer un élément modulaire simple, transportable sur le lieu d'installation. Ladite opération comprend l'application d'un encadrement (25), ayant section ouverte en forme de P qui forme un étau flexible entre lequel la feuille photovoltaïque (110) et une extrémité (21') de la section (2, 3) apparaissent serrées de façon flexible ;
- Le raccordement de la structure modulaire à une structure sous-jacente (100) et disposition d'une structure modulaire à côté d'une autre structure modulaire contiguë ; ledit kit d'accrochage comprend une bride (4) munie d'une base inférieure (6) de raccordement à la structure sous-jacente (100), ladite bride raccordant sur un côté de la section (2) de la structure modulaire et étant configurée de sorte à tenir, sur l'autre côté, la section (3) d'une structure modulaire contiguë, où ladite bride (4) comprend une base supérieure (5) pourvue d'un orifice (7) pour le passage des moyens de raccordement, le raccordement à la section (2) se faisant à travers un élément (15) intercalé entre la base supérieure (5) de la bride (4) et la section (2) située sur la base inférieure (6) de la bride et introduisant les moyens de raccordement dans l'élément intercalé (5) à travers l'orifice (7).
